# NEUE EUROPÄISCHE PATENTSCHRIFT

(11) **EP 2 128 406 B2**
(45) Veröffentlichungstag und Bekanntmachung des Hinweises auf die Entscheidung über den Einspruch: **02.01.2019**
(45) Hinweis auf die Patenterteilung: 26.01.2011
(21) Anmeldenummer: 08009564.9
(22) Anmeldetag: 26.05.2008
(51) Int. Cl.: F02C 9/28, F02C 9/32, F02C 9/54

(54) **Verfahren zum Betreiben einer Gasturbine**
Method for operating a gas turbine
Procédé destiné à l'operation d'une turbine à gaz

(43) Veröffentlichungstag der Anmeldung: 02.12.2009
(73) Patentinhaber: Siemens Aktiengesellschaft, 80333 München (DE)
(72) Erfinder: Grewe, Claus, 45359 Essen (DE); Simon, Dieter, Dr., 45473 Mülheim an der Ruhr (DE)

(56) Entgegenhaltungen:
- EP-A1- 1 526 263
- WO-A1-96/28644
- WO-A1-2007/045528
- DE-A1- 19 516 799
- JP-A- S5 857 098
- US-A- 4 627 234
- US-A1- 2006 201 132
- US-A1- 2008 047 275

## Beschreibung

Die Erfindung betrifft ein Verfahren zum Betreiben einer Gasturbine umfassend einen Verdichter, eine Brennkammer und eine Turbine. Sie betrifft weiter eine derartige Gasturbine und eine Gas- und Dampfturbinenanlage.

Eine Gasturbine ist eine Verbrennungskraftmaschine bestehend aus einer Turbine mit einem vorgeschalteten Verdichter und einer dazwischen geschalteten Brennkammer. Dabei wird zunächst Luft über die Beschaufelung einer oder mehrerer Verdichterstufen komprimiert, anschließend in der Brennkammer mit einem gasförmigen oder flüssigen Treibstoff gemischt, gezündet und verbrannt. Außerdem wird die Luft zur Kühlung eingesetzt. So entsteht ein Heißgas (Mischung aus Verbrennungsgas und Luft), welches im nachfolgenden Turbinenteil entspannt wird, wobei sich thermische in mechanische Energie wandelt. Diese mechanische Energie treibt zunächst den Verdichter an, der verbleibende Anteil wird beispielsweise zum Antrieb eines Generators verwendet.

Der Verdichter besteht üblicherweise aus mehreren Laufrädern mit Verdichterschaufeln in axialer Bauform. Er wandelt die kinetische Energie der einströmenden Luftmasse in den diffusorförmigen, d. h. sich erweiternden Zwischenräumen der Verdichterschaufeln in Druckenergie. Die dabei verlorene kinetische Energie wird in einer Rotorstufe wieder ausgeglichen. Eine komplette Verdichterstufe eines Axialverdichters besteht also aus einer Rotorstufe, in der sowohl Druck und Temperatur als auch die Geschwindigkeit steigen, und einer Statorstufe, in der der Druck zu Ungunsten der Geschwindigkeit steigt. Die Rotorstufen sind hintereinander auf einer Anzahl von Trommeln angeordnet, die Statorstufen sind fest in die Innenseite des Verdichtergehäuses eingebaut.

Die hohe Kompression der Luft verursacht einen starken Temperaturanstieg. Die so erhitzte Luft strömt anschließend in die Brennkammer, wo ihr ein Brennstoff zugeführt wird. Beim Triebwerksstart zünden Zündkerzen den Brennstoff, anschließend erfolgt die Verbrennung kontinuierlich. Durch die Verbrennung steigt die Temperatur erneut und das Gas dehnt sich aus.

Die von der Brennkammer abströmenden Gase treffen anschließend auf eine Turbine, wo ihre kinetische und thermische Energie in mechanische Energie umgewandelt wird. Diese treibt über eine Welle zunächst den Verdichter an, und - je nach Auslegungszweck der Gasturbine - einen Generator zur Stromerzeugung.

Gasturbinen kommen heute in Gas- und Dampfturbinenanlagen (GuD-Anlagen) zur Anwendung und dienen dort überwiegend der Stromerzeugung. Dabei umfasst eine moderne GuD-Anlage üblicherweise ein bis vier Gasturbinen und mindestens eine Dampfturbine, wobei entweder jede Turbine jeweils einen Generator antreibt (Mehrwellenanlage) oder eine Gasturbine mit der Dampfturbine auf einer gemeinsamen Welle einen einzigen Generator antreibt (Einwellenanlage). Die heißen Abgase der Gasturbine werden dabei in einem Abhitzedampferzeuger zur Erzeugung von Wasserdampf verwendet. Der Dampf wird anschließend der Dampfturbine zugeführt. Üblicherweise entfallen ca. 2/3 der elektrischen Leistung auf die Gasturbine und 1/3 auf den Dampfprozess.

Je nach Verfügbarkeit der Energieträger kann ein GuD-Kraftwerk auch als IGCC-Anlage (Integrated Gasification Combined Cycle) ausgelegt sein. Dabei ist dem GuD-Prozess eine Brennstoffvergasung vorgeschaltet. Primärenergie (Kohle, Biomasse, Abfall) wird dabei in einem Vergaser zu energiereichem Gas vergast. Das entstandene Rohgas wird gekühlt, gereinigt und durchläuft dabei Entschwefelungsanlagen, Filter und andere Einheiten. Anschließend wird das so erzeugte Synthesegas den Gasturbinen der GuD-Anlage zugeführt.

Zur Erzeugung des Synthesegases wird je nach Konzept Luft am Verdichterende der Gasturbine entnommen und in einer Luftzerlegungsanlage in ihre Hauptbestandteile Sauerstoff und Stickstoff zerlegt. Im voll integrierten IGCC-Betrieb wird dabei zur Luftzerlegung ausschließlich vom Verdichterende der Gasturbine entnommene Luft verwendet, beim teilintegrierten Konzept ist ein zusätzlicher externer Kompressor vorgesehen. Der in der Luftzerlegungsanlage gewonnene Sauerstoff wird zur Synthesegaserzeugung verwandt, ein Teil des in der Luftzerlegungsanlage als Nebenprodukt anfallenden Stickstoffs wird dem Synthesegas beigemischt und in den Brennkammern der Gasturbine verbrannt.

Die Regelung der Gasturbine erfolgt üblicherweise durch Leistungs- und Temperaturregler. Hierbei übernimmt der Leistungsregler üblicherweise über Verstellung des Brennstoffventils die Einhaltung/Einregelung des Leistungssollwertes und der Temperaturregler die Einhaltung einer bestimmten Turbinenaustrittstemperatur mittels Verstellung der Verdichtervorleitschaufeln, d. h. der Leitschaufeln am Eintritt des Verdichters.

Des Weiteren ist aus der US 2008/0047 275 A1 bekannt, den Druck am Austritt des Verdichters einer separat betriebenen Gasturbine zu regeln.

Insbesondere bei den oben beschriebenen IGCC-Prozessen kann es beim üblichen Regelkonzept zu Instabilitäten (insbesondere im Verstellbereich der Vorleitschaufeln) zwischen der Turbinenaustrittstemperaturregelung und der Luftzerlegungsanlage kommen. Bereits leichte Änderungen der Vorleitschaufelstellung des Verdichters der Gasturbine können dabei zu starken Schwankungen der Menge der entnommenen Luft führen, die dann wieder auf die Gasturbine zurückwirken und in der Art einer Kaskade zu nicht mehr ausregelbaren Schwankungen führen. Derartige starke Instabilitäten können nur durch Blockierung der Vorleitschaufeln durch manuellen Eingriff des Bedienpersonals unterbunden werden, wobei allerdings die Leistungsregelung der Gasturbine nicht mehr möglich ist. Die Schwankungen können sogar derart stark sein, dass unter Umständen die Verfügbarkeit der Gasturbine und angrenzender Systeme (wie z. B. der Luftzerlegungsanlage) nicht mehr gewährleistet werden kann.

Der Erfindung liegt daher die Aufgabe zugrunde, ein Verfahren zum Betreiben einer Gasturbine der oben genannten Art anzugeben, welches einen besonders sicheren und zuverlässigen Betrieb der Gasturbine erlaubt. Weiterhin soll eine zur Durchführung des Verfahrens geeignete Gasturbine und GuD-Anlage angegeben werden.

Bezüglich des Verfahrens wird diese Aufgabe durch die Merkmale des Anspruchs 1 gelöst.

Die Erfindung geht von der Überlegung aus, dass ein besonders zuverlässiger und sicherer Betrieb der Gasturbine möglich wäre, wenn Luftmengenschwankungen und damit verbundene Instabilitäten in der Gasturbine konsequent vermieden würden. Dabei treten diese Instabilitäten insbesondere im Bereich des Austritts des Verdichters auf. Diese Instabilitäten sind im Wesentlichen durch Druckschwankungen gekennzeichnet. Um eine Überwachung dieser Schwankungen zu ermöglichen, sollte der Druck am Ende des Verdichters gemessen werden. Um weiterhin eine automatische Kontrolle und Vermeidung der Instabilitäten zu ermöglichen, sollte der Verdichterenddruck als Regelgröße bei der Regelung der Gasturbine verwendet werden.

Dabei wird eine maximale Änderungsgeschwindigkeit des Verdichterenddrucks vorgegeben. Insbesondere während des Anfahrens der Gasturbine oder während Lastwechseln wird dadurch eine zu schnelle Änderung des Druckes am Verdichterende vermieden, wodurch eine Entstehung von Instabilitäten oder Kaskaden konsequent unterbunden wird.

Somit bleibt die Gasturbine in diesen Betriebszuständen stets zuverlässig und betriebssicher.

Erfindungsgemäß wird für den Verdichterenddruck ein Sollwert vorgegeben. Dies ist insbesondere während des Dauerbetriebs mit einem vorgegebenen Leistungssollwert sinnvoll. Durch die Kontrolle und Regelung des Verdichterenddrucks auf einen vorgegebenen Sollwert wird ein insgesamt stabilerer Betrieb der Gasturbine ermöchtlicht, weiterhin fährt die Gasturbine außerdem mit einer konstanteren Turbinenleistung.

Vorteilhafterweise wird der Verdichterenddruck durch eine Veränderung der Stellung der Vorleitschaufeln geregelt. Die Stellung der Vorleitschaufeln hat nämlich einen direkten Einfluss auf die durch den Verdichter strömende Luftmenge. Im bisherigen Konzept wurde die Stellung der Verdichtervorleitschaufeln anhand der Turbinenaustrittstemperatur bestimmt. Dabei wurde diese Temperatur durch Thermoelemente gemessen, die eine wesentlich höhere Reaktionszeit als Drucksensoren für den Verdichterenddruck aufweisen. Dadurch kann die Steuerung der Verdichtervorleitschaufeln über den Verdichterenddruck nahezu unverzögert (z. B. ca. 6 sec. Verzug/Ansprechschwelle 105 mbar) erfolgen.

Vorteilhafterweise wird die Abgastemperatur der Gasturbine durch eine Veränderung der Brennstoffzufuhr zu den Brennern der Brennkammer geregelt. Durch eine derartige Regelung der Turbinenaustrittstemperatur kommt es nicht mehr zu unzulässig hohen Turbinenaustrittstemperaturschwankungen, da die Brennstoffventile die Temperatur schneller und exakter ausregeln als die Vorleitschaufeln der Gasturbine, wie im bisherigen Konzept vorgesehen.

In weiterer vorteilhafter Ausgestaltung wird am Austritt des Verdichters der Gasturbine Luft entnommen. Insbesondere bei Gasturbinen mit einer Luftentnahme am Ende des Verdichters für eine Luftzerlegungsanlage, welche Sauerstoff für die Vergasung von beispielsweise Kohle zur Verfügung stellt, können hohe Druckschwankungen am Ende des Verdichters auftreten. Diese Instabilitäten treten aufgrund der fehlenden mechanischen Entkopplung des Luftentnahmesystems auf, so dass es zu Wechselwirkungen zwischen den Systemen kommt. Durch eine entsprechende Druckregelung der Gasturbine werden diese Instabilitäten vermieden und die Luftzerlegungsanlage muss lediglich den notwendigen Massenstrom entnehmen.

Die mit der Erfindung verbundenen Vorteile bestehen insbesondere darin, dass durch die Verwendung des Verdichterenddrucks als Regelgröße zur Regelung der Gasturbine ein besonders sicherer und zuverlässiger Betrieb der Gasturbine gewährleistet werden kann, da durch die an die Luftzerlegungsanlage angepasste Begrenzung der Änderungsgeschwindigkeit des Verdichterenddrucks keine unzulässigen Rückkopplungen und Instabilitäten im Bereich des Austritts des Verdichters auftreten können.

Durch das Druckregelungskonzept kann bei voll integriertem IGCC-Betrieb mit Luftentnahme die bisher übliche Regelarmatur zwischen Gasturbine und Luftzerlegungsanlage zur Druck- und Massenstromregelung entfallen. Die Luftzerlegung entnimmt entsprechend ihres Bedarfs Luft bei bereits von der Gasturbine geregeltem konstantem Druck oder maximalem Druckgradienten. Beim teilintegrierten Konzept kann eine Regelarmatur zur Massenstrombegrenzung zur Luftentnahme weiterhin verwendet werden. Das Druckregelungskonzept berücksichtigt hier alle Integrationsgrade.

Durch das Druckregelkonzept kommt es weiterhin nicht mehr zu unzulässig hohen Turbinenaustrittstemperaturschwankungen, da die Brennstoffventile die Temperatur schneller und exakter ausregeln als die Vorleitschaufeln der Gasturbine, wodurch eine insgesamt sanftere Reaktion aller Anlagenteile auch in Störfällen ermöglicht wird. Durch eine übergeordnete Leistungsreglung können die Erfordernisse des Lastbetreibers bzgl. des Leistungssollwertes im Normalbetrieb der Gasturbine erfüllt werden. Bei einer derartigen Leistungsregelung wird im Verstellbereich der Vorleitschaufeln immer der zulässige Druckgradient für die Luftzerlegungsanlage eingehalten. Durch die Reglerstruktur im Druckregelungskonzept können Einflüsse von außen (Luftzerlegungsanlage, Kohlevergasung) mit eindeutigem und reproduzierbarem Verhalten eingestellt und auf Kundenanforderungen optimiert werden.

Ein Ausführungsbeispiel der Erfindung wird anhand einer Zeichnung näherer erläutert. Darin zeigen:
- FIG 1: einen Längsschnitt einer Gasturbine, und
- FIG 2: eine schematische Darstellung des Druckregelungs- konzepts.

Gleiche Teile sind in beiden Figuren mit denselben Bezugszeichen versehen.

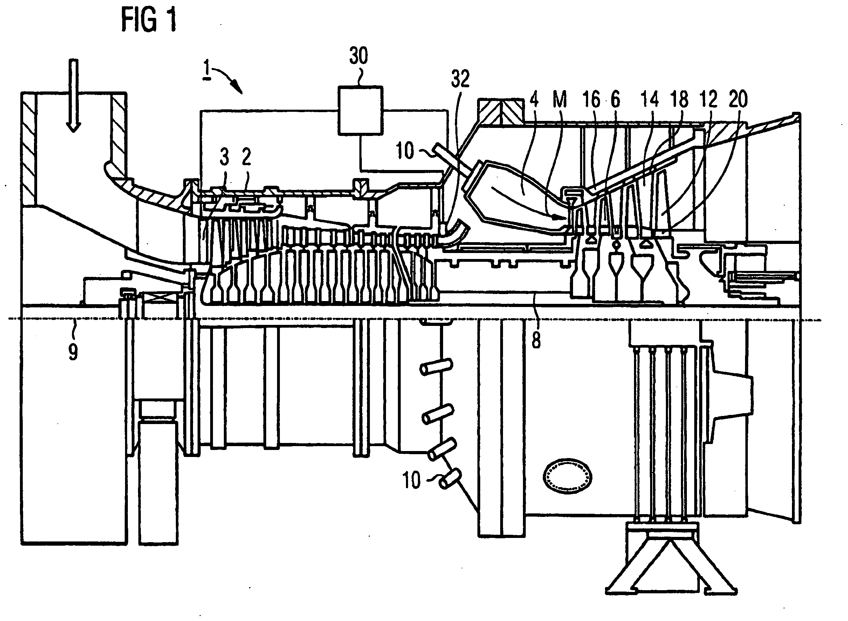

Die FIG 1 zeigt beispielhaft eine Gasturbine 1 in Ringbrennkammerbauweise. Auch eine Vielzahl anderer Konzepte wie z. B. Silobrennkammern oder Rohrbrennkammern sind denkbar. Die Gasturbine 1 weist dabei einen Verdichter 2 zur Kompression der Verbrennungsluft auf. Zur Regelung des Luftdurchsatzes durch den Verdichter 2 weist dieser verstellbare Vorleitschaufeln 3 auf. Weiterhin umfasst die Gasturbine eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die im gezeigten Beispiel in der Art einer Ringbrennkammer ausgeführte Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen aber zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 14 oder einer Leitschaufelreihe und aus einem Kranz von Laufschaufeln oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß befestigte Plattform 20 an der Turbinenwelle 8 befestigt.

Zur Steuerung der Gasturbine 1 umfasst diese ein Steuerungssystem 30, welches einerseits die Brennstoffzufuhr zu den Brennern 10 regelt, andererseits die Stellung der Vorleitschaufeln 3 des Verdichters 2. Üblicherweise werden dabei die Gasturbinenleistung und die Austrittstemperatur des Strömungsmediums M am Austritt der Gasturbine 1 als Regelgrößen herangezogen.

Beim klassischen Regelkonzept, bei dem die Turbinenaustrittstemperatur durch Verstellung der Vorleitschaufeln 3 des Verdichters 2 geregelt wird, und die Turbinenleistung durch Verstellung der Brennstoffzufuhr zu den Brennern 10, kann es jedoch zu Instabilitäten im Bereich des Austritts des Verdichters 2 kommen. Dies gilt insbesondere für den Fall, dass eine Luftentnahme am Ende des Verdichters 2 vorgesehen ist, die Luft einer nicht näher gezeigte Luftzerlegungsanlage zuführt, und in der die Luft in Sauerstoff und Stickstoff zerlegt wird und der Sauerstoff zur Vergasung eines Festbrennstoffs, beispielsweise Kohle in Synthesegas verwendet wird. Zur Vermeidung dieser Instabilitäten ist in der Gasturbine 1 am Ende des Verdichters 2 ein Drucksensor 32 vorgesehen, welcher den Verdichterenddruck überwacht.

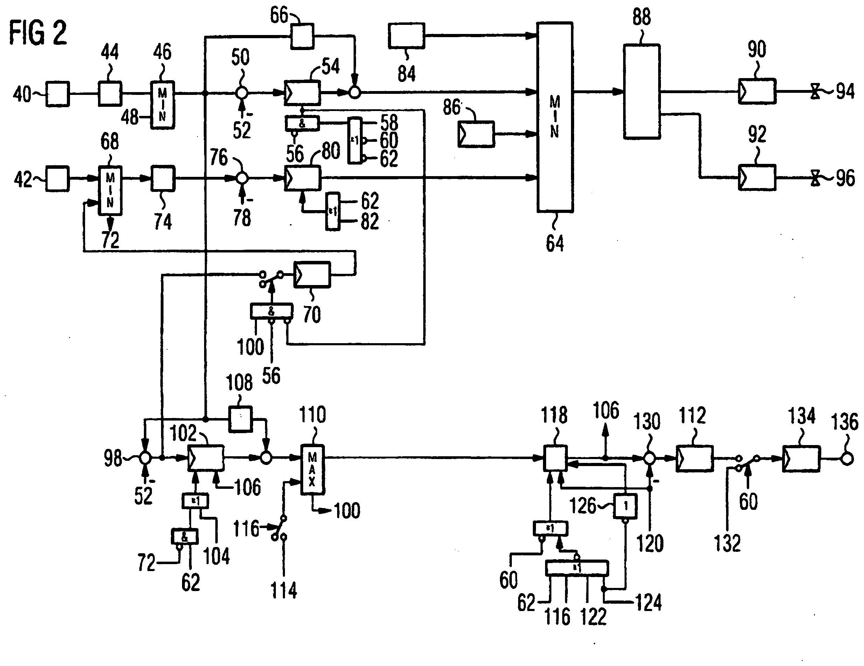

Die Funktionsweise der Steuereinheit 30 ist in dem Schaltplan nach FIG 2 dargestellt.

Zunächst werden für die Regelung der Gasturbine 1 ein Leistungssollwert 40 und ein Abgastemperatursollwert 42 vorgegeben. Dabei ist der Leistungssollwert 40 abhängig von den Erfordernissen des Netzbetreibers bzw. der erforderlichen elektrischen Leistung für das Stromnetz. Der Temperatursollwert wird je nach Auslegung des in einem Gas- und Dampfturbinenkraftwerk üblicherweise der Gasturbine 1 nachgeschalteten Dampfkessels bestimmt.

Der Leistungssollwert 40 wird zunächst an eine Verarbeitungseinheit 44 weitergeleitet, die entsprechende Grenzwerte für die Änderung der Leistung mitberücksichtigt und einen entsprechend verzögerten Leistungssollwert ausgibt. Dieser verzögerte Leistungssollwert wird an eine weitere Verarbeitungseinheit 46 weitergeleitet, die den Leistungssollwert auf Überschreiten eines Grenzleistungswertes 48, der von der Auslegung der Gasturbine 1 abhängig ist, überprüft. Dabei wird das Minimum aus dem Grenzleistungswert 48 und dem aus der Verarbeitungseinheit 44 ausgegebenen verzögerten Leistungssollwert gebildet und weitergegeben.

In der Differenzeinheit 50 wird dann zunächst die Differenz des vorgegebenen Leistungssollwertes zum aktuellen normierten Leistungsistwert 52 gebildet und an die Drehzahlleistungsregeleinheit 54 weitergegeben. Die Drehzahlleistungsregeleinheit 54 wird dabei nur dann freigegeben, wenn folgende Voraussetzungen erfüllt sind: Erstens muss die Abgastemperaturkontrolle nicht aktiviert 56 sein, zweitens müssen mindestens entweder die Verdichtervorleitschaufeln geschlossen 58 sein, der Vorleitschaufelregler nicht aktiviert 60 oder die Abgastemperaturkontrolle nicht im Eingriff 62 sein.

Der im Drehzahlleistungsregler ermittelte Leistungswert wird anschließend an die Verarbeitungseinheit 64 weitergegeben. Alternativ zur Verarbeitung im Drehzahlleistungsregler 54 kann auch eine Überbrükkung desselben über eine Überbrückungseinheit 66 erfolgen, so dass ein direkter proportionaler Durchgriff des Leistungssollwertes aus der Verarbeitungseinheit 46 an die Verarbeitungseinheit 64 erfolgt.

Parallel zum Leistungssollwert 40 wird der Abgastemperatursollwert 42 verarbeitet. Dieser wird zunächst an eine Verarbeitungseinheit 68 gegeben, die ein Minimum aus dem vorgegebenen Abgastemperatursollwert 42 und einem Abgastemperaturwert des Mindestabgastemperaturreglers 70 bildet. Für den Fall, dass die Minimumbildung den Ausgangswert des Mindestabgastemperaturreglers 70 ergibt, gibt die Verarbeitungseinheit 68 das Signal Mindestabgastemperaturregler nicht im Eingriff 72 aus.

Der von der Verarbeitungseinheit 68 ermittelte Wert für die Abgastemperatur wird an eine weitere Verarbeitungseinheit 74 weitergeleitet, in der Umgebungsbedingungen wie Außentemperatur und Außendruck berücksichtigt werden sowie betriebsspezifisches Grenzwerte. Der so ermittelte Sollwert für die Abgastemperatur wird an eine Differenzeinheit 76 weitergegeben, in der die Differenz zum aktuellen Abgastemperaturistwert 78 ermittelt wird. Die ermittelte Differenz wird an den Abgastemperaturregler 80 weitergegeben. Dabei wird der Abgastemperaturregler 80 freigegeben, wenn zumindest das Eingangssignal Abgastemperaturregler im Eingriff 62 aktiv ist oder ein Lastabwurf 82 erfolgt, d. h. eine plötzliche Absenkung der abgenommenen Leistung an der Gasturbine 1. Das Ausgangssignal des Abgastemperaturreglers 80 wird sodann ebenfalls an die Verarbeitungseinheit 64 weitergegeben.

Die Verarbeitungseinheit 64 berücksichtigt neben den Ausgangswerten des Drehzahlleistungsreglers 54 und dem des Abgastemperaturreglers 80 noch weitere Eingangsdaten. Dazu gehören zum einen die Brennstoffrnassenstromwerte des Hochlaufgebers 84, der den Anfahrprozess der Gasturbine 1 anhand einer vorgegebenen Brennstoffmassenstromkurve steuert, andererseits der vorgegebene maximale Druckverhältnissollwert des Druckverhältnisbegrenzungsreglers 86, der Ein- und Ausgangsdruck des Verdichters 2 der Gasturbine 1 überwacht. Im Verdichter 2 können nämlich beispielsweise im Fall von Verpuffungen in der Brennkammer 4 der Gasturbine 1 ein Strömungsabriss bzw. eine Strömungsumkehr auftreten, welche eine Reduzierung der Leistung der Gasturbine erforderlich machen würden.

Die Verarbeitungseinheit 64 wählt aus der Zahl der Eingangsdaten jeweils den unkritischsten Brennstoffrnassenstromwert aus und gibt den ermittelten kleinsten Wert an die Stellungssollwertbildungseinheit 88 für die Brennstoffventile weiter. Bei der hier vorliegenden Steuereinheit 30 für eine IGCC-Anlage, d. h. eine Anlage mit integrierter Kohlevergasung, wird dabei jeweils ein Anteil von Kohlegas und beigemischtem Erdgas ermittelt, und der jeweilige Wert für die Brennstoffmenge an den Stellungsregler des Erdgasventils 90 bzw. den Stellungsregler des Kohlegasventils 92 weitergegeben. Die Stellungsregler 90, 92 steuern dann jeweils die Stellung des Erdgasventils 94 bzw. des Kohlegasventils 96.

Der Mindestabgastemperaturregler 70 erhält sein Eingangssignal abhängig vom Betriebszustand der Gasturbine. Im Anfahrprozess der Gasturbine erhält er das Leistungsdifferenzsignal von der Differenzeinheit 98, welche die Differenz aus der von der Verarbeitungseinheit 46 abgegebenen Sollleistung und der aktuellen normierten Leistung 52 der Gasturbine bildet, nach dem Anfahrprozess, d. h., wenn sowohl der Drehzahlleistungsregler 54 freigegeben ist, der Abgastemperaturregler aktiviert 56, sowie der Verdichtermindestdruckregler nicht im Eingriff 100 ist, ist nur noch der vorgegebene Temperatursollwett 42 ausschlaggebend.

Die Differenz aus aktuellem normiertem Leistungsistwert 52 und Leistungssollwert aus der Verarbeitungseinheit 46 wird als Eingangssignal an den Leitschaufelleistungsregler 102 gegeben. Der Leitschaufelleistungsregler 102 ist freigegeben, wenn zumindest der Druckverhältnisbegrenzungsregler im Eingriff 104 ist oder der Abgastemperaturregler im Eingriff 62 und der Mindestabgastemperaturregler im Eingriff 72 ist. Weiterhin wird der Verdichterenddrucksollwert 106 für den Leitschaufelleistungsregler 102 als untere Begrenzung zur Verfügung gestellt.

Analog zum Drehzahlleistungsregler 54 ist auch beim Leitschaufelleistungsregler 102 eine Überbrückungseinheit 108 vorgesehen, über die bedarfsweise ein proportionaler Durchgriff des Sollwerts erfolgen kann. Das Signal des Leitschaufelleistungsreglers 102 bzw. der Überbrückungseinheit 108 wird an eine Verarbeitungseinheit 110 weitergeleitet, welche einen vorläufigen Sollwert für den Leitschaufeldruckregler 112 ermittelt. Der Verarbeitungseinheit 110 stehen dabei weiterhin als Eingangsdaten ein Sollwert für den Verdichtermindestenddruck 114 zur Verfügung, es sei denn, es ist der Verdichtermindestdruckregler nicht aktiviert 116. Die Verarbeitungseinheit 110 stellt weiterhin das Verdichtermindestdruckregler im Eingriff 100 zur Verfügung.

Das Ausgangssignal der Verarbeitungseinheit 110 wird an die Verarbeitungseinheit 118 weitergeleitet. Diese Verarbeitungseinheit 118 ermittelt nun einen Sollwert für den Verdichterenddruck und verwendet dabei alle betriebsgemäß vorgegebenen Grenzwerte für den Verdichterenddruck sowie die zulässige Änderungsgeschwindigkeit des Verdichterenddrucks. Erfindungsgemäß erhält die Verarbeitungseinheit 118 auch direkt den Verdichterenddruckistwert 120 von dem Sensor 32 in der Gasturbine 1.

Sofern weder der Vorleitschaufelregler aktiviert ist, d. h. die Leitschaufeln manuell geregelt werden, noch der Abgastemperaturregler im Eingriff 62, der Verdichtermindestdruckregler aktiviert 116 oder der Druckverhältnisbegrenzungsregler im Eingriff 122 sind, gibt die Verarbeitungseinheit 118 den momentanen Verdichterenddruckistwert 120 als Sollwert aus. Sobald die Leitschaufeldruckregelfunktion aktiviert 124 wird, wird der Sollwert eingefroren und über die Verarbeitungseinheit 126 direkt an die Verarbeitungseinheit 118 weitergeleitet. Diese sorgt dann für einen entsprechend konstanten Verdichterenddrucksollwert 106, der über eine Differenzeinheit 130 an den Leitschaufeldruckregler 112 weitergegeben wird.

Der Leitschaufeldruckregler 112 übernimmt dann die Steuerung der Leitschaufeln, sofern der Vorleitschaufelregler aktiviert 60 ist, andernfalls wird ein manuell vorgegebener Leitschaufelstellsollwert 132 an die Leitschaufelpositionskontrolleinheit 134 weitergegeben. Diese steuert dann dementsprechend den Motor 136 für die Stellung der Leitschaufeln.

Durch das neuartige Regelungskonzept, insbesondere die Berücksichtigung des Verdichterenddrucks in der Verarbeitungseinheit 118 ist ein insgesamt sichererer und stabilerer Betrieb der Gasturbine 1 und der gesamten GuD-Anlage möglich. Dies gilt insbesondere für solche GuD-Anlagen, die für den IGCC-Betrieb ausgelegt sind, da hier durch eine kontinuierliche Überwachung des Verdichterenddrucks und entsprechende Regelung der Gasturbine 1 Störungen durch die Luftentnahme zur Kohlevergasung konsequent vermieden werden können.

## Patentansprüche

1. Verfahren zum Betreiben einer Gasturbine (1), umfassend einen Verdichter (2), eine Brennkammer (4) und eine Turbine (6),
bei dem der Verdichterenddruck (120) als Regelgröße verwendet wird,
**dadurch gekennzeichnet, dass**
eine maximale Änderungsgeschwindigkeit des Verdichterenddrucks (120) und ein Sollwert für den Verdichterenddruck (120) vorgegeben wird,
indem eine Verarbeitungseinheit (118) diesen Sollwert für den Verdichterenddruck (120) ermittelt und dabei alle betriebsgemäß vorgegebenen Grenzwerte für den Verdichterenddruck (120) sowie die zulässige Änderungsgeschwindigkeit des Verdichterenddrucks (120) verwendet, wobei die Verarbeitungseinheit (118) auch direkt den Verdichterenddruckistwert (120) von einem Sensor (32) in der Gasturbine (1) erhält.

2. Verfahren nach Anspruch 1,
bei dem der Verdichter (2) der Gasturbine (1) eine Anzahl verstellbarer Vorleitschaufeln (3) umfasst, und
bei dem der Verdichterenddruck (120) durch eine Veränderung der Stellung der Vorleitschaufeln (3) geregelt wird.

3. Verfahren nach einem der Ansprüche 1 bis 2,
bei dem die Abgastemperatur der Gasturbine (1) durch eine Veränderung der Brennstoffzufuhr zu den Brennern (10) der Brennkammer (4) geregelt wird.

4. Verfahren nach einem der Ansprüche 1 bis 3,
bei dem am Austritt des Gasturbinen-Verdichters (4) Luft entnommen wird.

5. Verfahren nach Anspruch 4, bei dem die entnommene Luft einer Luftzerlegungsanlage zugeführt wird, und der in der Luftzerlegungsanlage gewonnene Sauerstoff zur Synthesegaserzeugung verwandt wird, welches Synthesegas von der Gasturbine zur Heißgaserzeugung verbrannt wird.

6. Gasturbine (1),
umfassend einen Verdichter (2), eine Brennkammer (4), eine Turbine (6) und eine Steuereinrichtung mit einem ihr zugeordneten Verdichterenddrucksensor,
wobei die Steuereinrichtung für die Durchführung des Verfahrens nach einem der Ansprüche 1 bis 5 ausgelegt ist.

7. Gas- und Dampfturbinenanlage mit einer Gasturbine (1) nach Anspruch 6.

## Claims

1. Method for operating a gas turbine (1),
comprising a compressor (2), a combustion chamber (4) and a turbine (6),
in which the compressor discharge pressure (120) is used as a control variable,
**characterized in that**
a maximum rate of change of the compressor discharge pressure (120) and a reference value for the compressor discharge pressure (120) is specified by virtue of a processing unit (118) determining said reference value for the compressor discharge pressure (120) and in the process using all the operationally-dependently specified limiting values for the compressor discharge pressure (120) and also the permissible rate of change of the compressor discharge pressure (120), wherein the processing unit (118) also directly receives the compressor discharge pressure actual value (120) from a sensor (32) in the gas turbine (1).

2. Method according to Claim 1,
in which the compressor (2) of the gas turbine (1) comprises a number of variable inlet guide vanes (3), and in which the compressor discharge pressure (120) is controlled by changing the position of the inlet guide vanes (3).

3. Method according to one of Claims 1 to 2,
in which the exhaust gas temperature of the gas turbine (1) is controlled by changing the fuel feed to the burners (10) of the combustion chamber (4).

4. Method according to one of Claims 1 to 3,
in which air is extracted at the exit of the gas turbine compressor (4).

5. Method according to Claim 4,
in which the extracted air is fed to an air-separation plant, and the oxygen which is produced in the air-separation plant is used for synthesis gas production, which synthesis gas is combusted by the gas turbine for hot gas production.

6. Gas turbine (1),
comprising a compressor (2), a combustion chamber (4), a turbine (6) and a control unit with a compressor discharge pressure sensor which is associated with it,
wherein the control unit is designed for carrying out the method according to one of Claims 1 to 5.

7. Gas and steam turbine plant with a gas turbine (1) according to Claim 6.

## Revendications

1. Procédé pour faire fonctionner une turbine (1) à gaz comprenant un compresseur (2), une chambre de combustion (4) et une turbine (6),
dans lequel on utilise la pression (120,) finale du compresseur comme grandeur de réglage,
**caractérisé en ce que**
on prescrit une vitesse maximum de variation et la pression (120) finale du compresseur et une valeur de consigne pour la pression (120) finale du compresseur,
par le fait qu'une unité (118) de traitement détermine cette valeur de consigne de la pression (120) finale du compresseur et utilise toutes les valeurs limites, prescrites conformément à l'exploitation, de la pression (120) finale du compresseur, ainsi que la vitesse de variation autorisée de la pression (120) finale du compresseur, l'unité (118) de traitement obtenant également directement la valeur (120) réelle de la pression finale du compresseur d'un capteur (32) de la turbine (1) à gaz.

2. Procédé suivant la revendication 1,
dans lequel le compresseur (2) de la turbine (1) à gaz comprend un certain nombre d'aubes (3) pré-directrices réglables et
dans lequel on règle la pression (120, 128) finale du compresseur par une modification de la position des aubes (3) pré-directrices.

3. Procédé suivant l'une des revendication 1,
dans lequel on règle la température d'échappement des gaz par une modification de l'apport en combustible aux brûleurs (10) de la chambre de combustion (4).

4. Procédé suivant l'une des revendications précédentes 1 à 3,
dans lequel on prélève de l'air à la sortie du compresseur (4) de la turbine (4) à gaz.

5. Procédé suivant la revendication 4, dans lequel on envoie l'air prélevé à une installation de fractionnement de l'air et on utilise l'oxygène obtenu dans l'installation de fractionnement de l'air pour la production de gaz de synthèse, lequel gaz de synthèse est brûlé par la turbine à gaz pour la production de gaz chaud.

6. Turbine (1) à gaz,
comprenant un compresseur (2), une chambre de combustion (4), une turbine (6) et un dispositif de commande ayant un capteur de pression finale du compresseur qui lui est associé, dans laquelle le dispositif de commande est conçu pour la mise en oeuvre du procédé suivant l'une des revendications 1 à 5.

7. Installation de turbine à gaz et de turbine à vapeur ayant une turbine (1) à gaz suivant la revendication 6.
